# EUROPÄISCHE PATENTANMELDUNG

(11) **EP 0 688 659 A2**
(43) Veröffentlichungstag der Anmeldung: **27.12.1995**
(21) Anmeldenummer: 95108966.3
(22) Anmeldetag: 10.06.1995
(51) Int. Cl.: B29C 51/26

(54) **Form- Stanz-Werkzeug zum Herstellen von Behältern aus thermoplastischer Kunststoffolie**

(30) Priorität: 23.06.1994 DE 4421979; 20.12.1994 DE 4445376
(71) Anmelder: Adolf Illig Maschinenbau GmbH & Co, D-74081 Heilbronn (DE)
(72) Erfinder: Kiefer, Günther, D-74193 Schwaigern (DE)

(57) **Zusammenfassung**

Bei einem Form-Stanz-Werkzeug zum Herstellen von Behältern aus einer thermoplastischen Kunststoffolie wird die Niederhalterkraft dadurch erhöht, daß der Schaft des Niederhalters mit einem Kolben versehen ist, der mit Druckluft beaufschlagt werden kann. Dadurch ist eine gute Kalibrierung des Behälterrandes möglich, ohne daß Hochdruckeinrichtungen erforderlich sind.

## Beschreibung

Die Erfindung betrifft ein Form- Stanz-Werkzeug zum Herstellen von Behältern aus thermoplastischer Kunststoffolie nach der Gattung des Hauptanspruches.

Ein solches Werkzeug ist aus der EP 0 525 483 A 1 bekannt. Bei diesem wird der Niederhalter, der als Ringkolben ausgebildet ist, mit Druckluft beaufschlagt, so daß die Kraft des Niederhalters in Abhängigkeit des Verfahrensablaufes gesteuert werden kann. So kann man beim Schließen des Werkzeuges zur Schonung des Antriebes keine Niederhalterkraft wirken lassen und erst bei geschlossenem Werkzeug oder beim Ausschieben des ausgestanzten Behälters beim Öffnen des Werkzeuges diese Niederhalterkraft aufbauen.

Wie man aus der genannten Schrift erkennen kann, wird die Formluft zum Ausformen der Behälter aus demselben Tank zugeführt wie die Druckluft zur Erzeugung der Niederhalterkraft. Die Formluft wirkt im Innern des geschlossenen Formwerkzeuges der Niederhalterkraft entgegen und hebt diese je nach maßlichen Verhältnissen mehr oder weniger auf oder diese wird sogar größer als die Niederhalterkraft. Dies spielt dann keine Rolle, wenn man die Niederhalterkraft nur zum Ausstoßen der geformten Behälter verwendet, denn beim Ausstoßen ist die Formluft bereits entlüftet.

Es gibt Behälter, bei denen der zwischen dem Schnittstempel und dem Niederhalter eingespannte Behälterrand kalibriert bzw. verdünnt werden soll oder bei denen in diesen Rand ein Siegelwulst eingeformt werden soll. Dazu ist eine entsprechende Niederhalterkraft als Gegenkraft zur Schließkraft des Werkzeuges erforderlich. Um diese zu erzeugen, ist es bekannt, die Formluft und die Druckluft zur Niederhalterbeaufschlagung aus zweierlei Druckluftnetzen mit unterschiedlichen Drücken zu speisen. Da die Formluft bei den heute häufig eingesetzten PP-Folien in der Größenordnung von 6 bar liegen muß, ist es erforderlich, zur Erzielung einer ausreichenden Niederhalterkraft ein Druckluftnetz mit ca. 12 bis 16 bar aufzubauen. Dies erfordert eine eigene Hochdruck-Kompressor-Anlage, da Druckluftnetze in Fertigungsbetrieben in der Regel einen maximalen Druck von 8 bis 10 bar haben. Dadurch werden die Druckluftkosten entsprechend hoch, ein eigenes Druckluftnetz muß installiert werden.

Der Erfindung lag die Aufgabe zugrunde, das Werkzeug so zu gestalten, daß eine ausreichende Niederhalterkraft bei Verwendung von Druckluft mit einem Druck erzielt werden kann, der im wesentlichen dem Druck der Formluft entspricht. Spezielle Hochdruckerzeuger und -netze sollten nicht erforderlich sein. Die konstruktiven Maßnahmen sollten eine sichere und zuverlässige Wirkungsweise gewährleisten und kostenmäßig im Rahmen liegen.

Gelöst ist diese Aufgabe erfindungsgemäß durch die im Kennzeichen des Hauptanspruches angegebenen Maßnahmen. Die Unteransprüche stellen vorteilhafte Aus- bzw. Weiterbildungen dar.

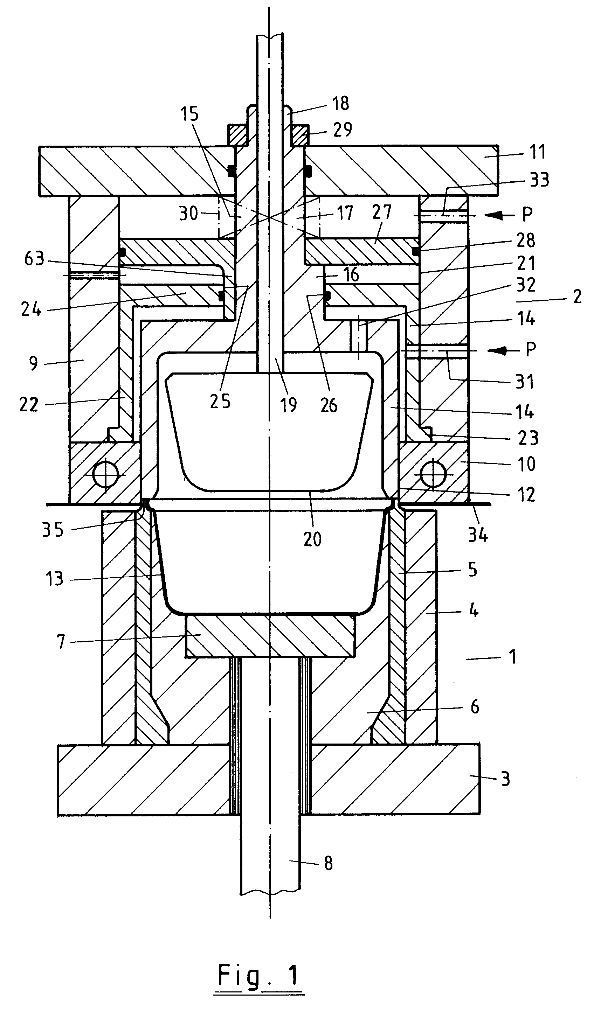

Ein Ausführungsbeispiel des Werkzeuges nach der Erfindung ist anhand der schematischen Zeichnung näher beschrieben. Es zeigen die Figur 1 - 4 jeweils einen Querschnitt durch ein Formnest eines Form-Stanz-Werkzeuges in vier verschiedenen Ausführungsformen.

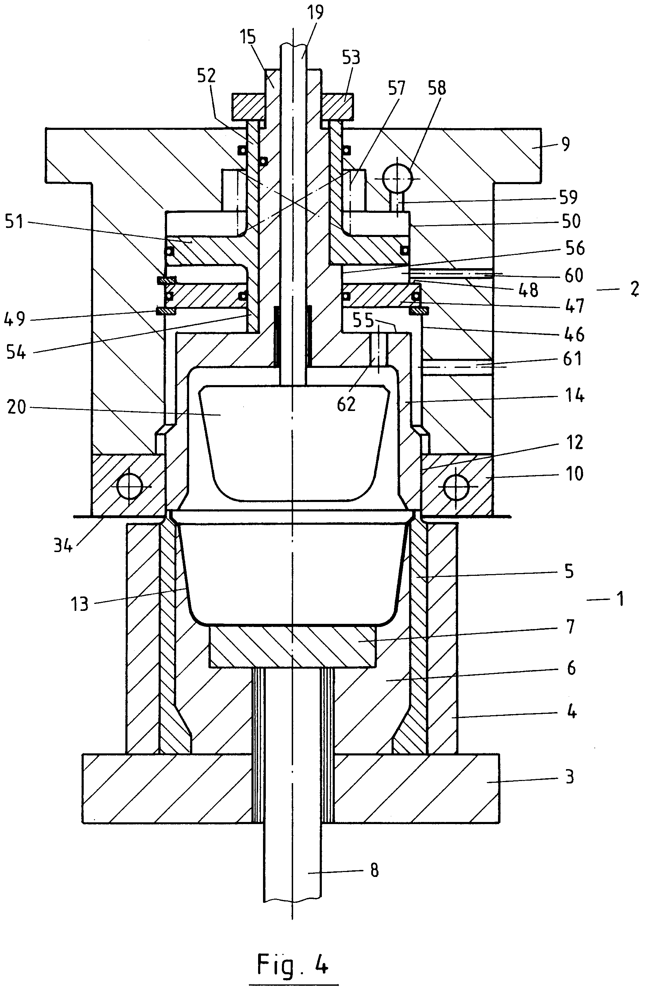

Das Form-Stanz-Werkzeug besteht in allen 4 gezeigten Ausführungsformen aus zwei Formhälften, dem Unterteil 1 und dem Oberteil 2. Dabei setzt sich das Unterteil 1 aus einer Grundplatte 3, dem Kühlblock 4, eingesetzen Schnittstempeln 5, Formeinsätzen 6 und Böden 7 mit je einer Auswerferstange 8 zusammen. Die Anordnung der einzelnen Formnester im Kühlblock 4 kann einreihig oder mehrreihig sein. Jede Reihe kann mehrere Formnester aufweisen. Das Oberteil 2 weist eine an der Zwischenplatte 9 montierte Schnittplatte 10 und eine Kopfplatte 11 auf. Zwischenplatte 9 und Kopfplatte 11 können, wie in Figur 4 dargestellt, aus einem Stück bestehen. In der Schnittplatte 10 sind Durchbrüche 12 entsprechend der auszustanzenden Kontur der Behälter 13 vorgesehen. In jedem Druchbruch 12 sitzt ein topfförmiger Niederhalter 14, der nach hinten in einen Schaft 15 mit mehreren Absätzen übergeht. Im Schaft 15 gleitet in einer zentralen Bohrung die Stange 19, die den Streckhelfer 20 trägt.

Gemäß einer ersten Ausführungsform nach Figur 1 sind in der Zwischenplatte 9 Bohrungen 21 mit größerem Durchmesser als die Durchbrüche 12 angeordnet. Ein Topf 22 ist in jede Bohrung 21 eingesetzt und durch einen Bund 23 gehalten. Der Boden des Topfes 23 ist als Bund 24 ausgebildet und weist eine Bohrung 25 auf entsprechend dem Durchmesser des Absatzes 16. Eine Dichtung 26 ist an dieser Berührungsstelle vorgesehen. Auf dem Absatz 16 des Schaftes 15 sitzt ein Kolben 27, der nach außen bis zur Bohrung 21 verläuft und eine umlaufende Dichtung 28 trägt. Der Absatz 17 des Schaftes 15 ragt durch die Kopfplatte 11 und wird außerhalb mit einer Mutter 29 befestigt, die auf dem Gewinde des Absatzes 18 sitzt.

Zwischen Kopfplatte 11 und Kolben 27 ist eine Druckfeder 30 zur Unterstützung der Niederhalterkraft und zur Lagedefinition der Niederhalter 14 montiert. Über Bohrungen 31, 32 kann Formluft ins Innere des Niederhalters 14 geleitet werden.

Über die Bohrung 33 wird Druckluft auf die Oberseite des Kolbens 27 geführt. Die dadurch entstehende Kraft wird über die Schulter des Absatzes 16 auf den Niederhalter 14 und damit auf seine der Folienbahn 34 zugewandte Ringfläche 35 übertragen. Diese Kraft dient der Kalibrierung/Quetschung/Formung des eingespannten Behälterrandes.

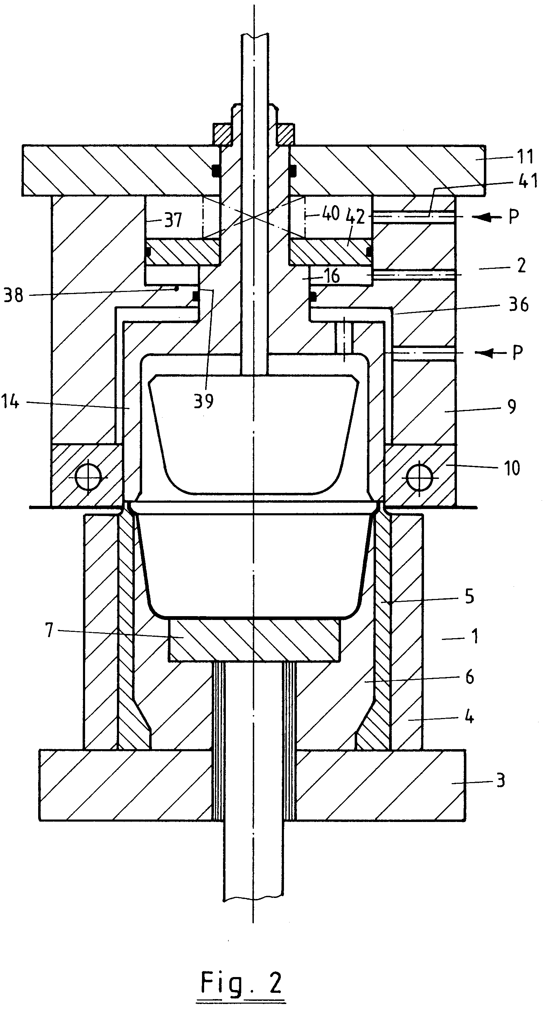

Eine zweite Ausführungsform des Form-Stanz-Werkzeuges zeigt Figur 2. In diesem Fall ist die Zwischenplatte 9 von beiden Seiten mit einer Bohrung 36, 37 versehen, deren Tiefe so abgestimmt ist, daß ein Bund 38 stehen bleibt, in dessen Bohrung 39 der Absatz 16 des Niederhalters 14 geführt ist. In der Bohrung 37 gleitet ein Kolben 42, der sich am Bund des Absatzes 16 abstützt und von einer Druckfeder 40 vorgespannt wird. Durch Druckluftzufuhr durch die Bohrung 41 in den Raum zwischen Kolben 42 und Kopfplatte 11 wird die Niederhalterkraft erzeugt.

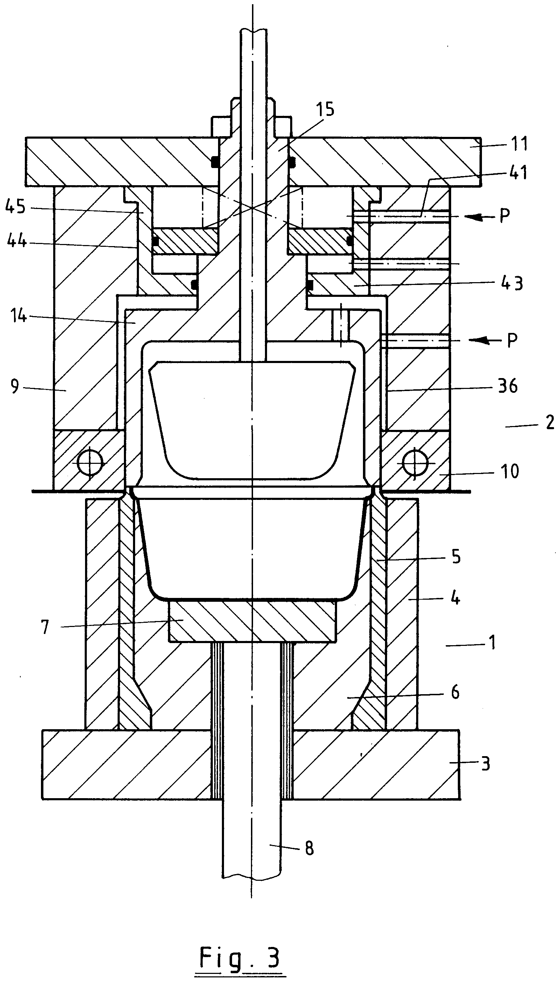

Figur 3 zeigt eine Abwandlung des Form-Stanz-Werkzeuges nach Figur 2 in der Weise, daß ein Bund 43 zur Führung des Absatzes 16 in der Weise gebildet wird, daß in eine Bohrung 44 in der Zwischenplatte 9 ein Topf 45 eingesetzt wird, dessen Boden diesen Bund 43 bildet. Diese Bauweise hat den Vorteil, daß die Bohrungen 36 und 44 von einer Seite her bearbeitet werden können, also ohne Umspannung der Zwischenplatte 9, sodaß keine Gefahr einer Exzentrizität besteht.

Die Ausführungsformen gemäß den Figuren 1 bis 3 haben den Nachteil, daß nicht alle Teile des Niederhalters einschließlich Hochdruckeinrichtung bei geöffnetem Werkzeug von der Trennebene aus ein- bzw. ausgebaut werden können. Diesen Nachteil vermeidet die Ausführungsform gemäß Figur 4, so daß Wartungs- und Reparaturarbeiten möglich sind, ohne die anderen Teile des Werkzeuges demontieren zu müssen. Dazu sind in der Zwischenplatte 9 Bohrungen 46 mit kleinerem Durchmesser als die Durchbrüche 12 in der Schnittplatte 10 vorgesehen.

In jeder Bohrung 46 sitzt ein Ringkolben 47, einerseits gehalten von einem Absatz 48, andererseits von einem Sicherungsring 49 (Fig. 4 rechts) oder gehalten zwischen zwei Sicherungsringen 49 (Fig. 4 links). Bei der Lösung mit einem Absatz 48 folgt eine im Durchmesser etwas kleinere Bohrung 50, in der ein Kolben 51 sitzt, der in Richtung des Endes des Schaftes 15 in einen Absatz 52 übergeht, der bis zur Anschlagmutter 53 reicht, die auf dem Schaft 15 sitzt.

Wird der Ringkolben 47 zwischen zwei Sicherungsringen 49 gehalten, sind die Bohrungen 46 und 50 gleich im Durchmesser. Bezüglich der Ausbildung des Kolbens 51 in Richtung Trennebene gibt es zwei Vorschläge. Gemäß Figur 4 links weist der Kolben 51 einen Absatz 54 auf, der durch den Ringkolben 47 ragt und sich auf der Schulter 55 des Niederhalters 14 abstützt. Figur 1 rechts zeigt, wie sich der Kolben 51 direkt auf einem Absatz 56 am Schaft 15 abstützt. Beide Lösungen haben ihre Vorteile.

Die gleiche Lösung ist in Figur 1 links dargestellt. Auch hier weist der Kolben 24 einen Ansatz 63 auf, der sich durch den Bund 24 bis zur Schulter 55 des Niederhalters 14 erstreckt.

Der Kolben 51 wird von einer Druckfeder 57 beaufschlagt, die damit den ganzen Niederhalter 4 nach unten drückt, bis die Anschlagmutter 53 an der Oberkante der Zwischenplatte 9 anliegt. Über Bohrungen 58, 59 kann Druckluft auf die Oberseite des Kolbens 51 geleitet werden. Zur Formluftzufuhr ist eine Bohrung 61 in der Zwischenplatte 9 vorgesehen. Über eine weitere Bohrung 62 gelangt diese ins Innere des Niederhalters 14. Eine Bohrung 60 dient der Entlüftung des Raumes zwischen Kolben 51 und Ringkolben 47.

Das Werkzeug wird in die Formstation einer Thermoformmaschine eingebaut und arbeitet wie folgt:
Bei geöffnetem Werkzeug wird ein Abschnitt einer erwärmten Folienbahn 34 zwischen die beiden Werkzeughälften 1, 2 transportiert und dieses soweit geschlossen, daß die Folienbahn 34 teilweise von den Schnittstempeln 5 durchtrennt wird. Die Niederhalter 14 weichen entsprechend zurück. Hierzu muß vom Antrieb der Thermoformmaschine nur die Kraft der Federn 25, 40, 57 überwunden werden. In dieser geschlossenen Stellung erfolgt die Druckluftzufuhr über entsprechende Bohrungen auf die Oberseite des Kolbens 27, 42, 51 wodurch der Niederhalter 14 nach unten gedrückt wird. Hierdurch wird der Behälterrand geformt. Gleichzeitig erfolgt die Zufuhr der Formluft und ggf. der Streckhelfereinsatz in bekannter Weise, wodurch die Behälter 13 verformt werden. Jetzt entweicht zunächst die Druckluft für die Niederhalterkraft, damit bei der nun einsetzenden Stanzbewegung des Werkzeugunterteils 1 die Niederhalterkraft abgebaut ist. Dann entweicht die Formluft, das Werkzeug öffnet und die geformten Artikel werden in bekannter Weise austransportiert und gestapelt.

Bei geöffnetem Werkzeug ist es bei der Ausführung nach Fig. 4 möglich, nach der Demontage der Streckhelfer 20 und dem Entfernen der Anschlagmutter 53 den Niederhalter 14 zur Trennebene hin herauszuziehen. Damit wird der Sicherungsring 49 zugänglich. Nach seiner Entfernung können Ringkolben 47 und Kolben 51 einschließlich Druckfeder 57 zur Trennebene hin entfernt werden. Der Austausch sämtlicher Dichtungen ist möglich. Es ist nicht erforderlich, die Schnittplatte 10 zu entfernen, um diese Zugänglichkeit zu erzielen.

## Patentansprüche

1. Form-Stanz-Werkzeug zum Herstellen von Behältern aus thermoplastischer Kunststoffolie mittels Differenzdruck, bestehend aus einem Unterteil mit den Formen der herzustellenden Behältern und entsprechenden Schnittstempeln sowie einem Oberteil mit der Schnittplatte mit Durchbrüchen und mit je einem darin verschiebbaren Niederhalter, der mit Druckluft zur Erzeugung einer Niederhalterkraft beaufschlagbar ist, dadurch gekennzeichnet, daß der Niederhalter (14) mit einem Kolben (27, 42, 51) in Wirkverbindung steht, der von der Rückseite mit Druckluft beaufschlagbar ist.

2. Form-Stanz-Werkzeug nach Anspruch 1 dadurch gekennzeichnet, daß der Kolben (27, 42; 51) gegen die Schulter eines Absatzes (16, 56) am Schaft (15) des Niederhalters (14) gedrückt wird.

3. Form-Stanz-Werkzeug nach Anspruch 1 dadurch gekennzeichnet, daß der Kolben (27, 42, 51) einen Absatz (54, 63) aufweist, der sich auf der Schulter (55) des Niederhalters (14) abstützt.

4. Form-Stanz-Werkzeug nach Anspruch 1 oder 2 dadurch gekennzeichnet, daß der Schaft (15) des Niederhalters (14) in einem Bund (24, 43) geführt ist, der vom Boden eines in die Zwischenplatte (9) eingesetzen Topfes (29, 45) gebildet wird.

5. Form-Stanz-Werkzeug nach Anspruch 4 dadurch gekennzeichnet, daß der Topf (22) von der dem Unterteil (1) zugewandten Seite her in die Zwischenplatte (9) eingesetzt ist.

6. Form-Stanz-Werkzeug nach Anspruch 4 dadurch gekennzeichnet, daß der Topf (45) von der Rückseite her in die Zwischenplatte (9) eingesetzt ist.

7. Form-Stanz-Werkzeug nach einem der Ansprüche 1 - 3 dadurch gekennzeichnet, daß der Bund (38) dadurch gebildet wird, daß die Summe der Bohrungstiefen der Bohrungen (36, 37) in der Zwischenplatte (9) kleiner ist als die Dicke der Zwischenplatte (9).

8. Form-Stanz-Werkzeug nach Anspruch 3 dadurch gekennzeichnet, daß die Durchmesser von Kolben (51), Ringkolben (47) und Niederhalter (14) gleich sind.

9. Form-Stanz-Werkzeug nach Anspruch 3 dadurch gekennzeichnet, daß der Durchmesser des Ringkolbens (47) geringfügig kleiner ist als der größte Durchmesser des Niederhalters (14) und geringfügig größer als der des Kolbens (51).

10. Form-Stanz-Werkzeug nach einem der Ansprüche 8 oder 9 dadurch gekennzeichnet, daß der Ringkolben (47) dadurch in seiner Bohrung (46) gehalten wird, daß er auf der Rückseite auf, einem Absatz (48) anliegt und auf der Vorderseite von einem Sicherungsring (49) gehalten wird.

11. Form-Stanz-Werkzeug nach einem der Ansprüche 8 oder 9 dadurch gekennzeichnet, daß der Ringkolben (47) zwischen zwei Sicherungsringen (49) gehalten ist.

12. Form-Stanz-Werkzeug nach einem der Ansprüche 8 bis 11 dadurch gekennzeichnet, daß der Kolben (51) einen Absatz (52) aufweist, der sich in Richtung des Schaftendes des Niederhalters (14) erstreckt und gegen den die Anschlagmutter (53) gezogen ist.

13. Form-Stanz-Werkzeug nach einem der Ansprüche 1 bis 12 dadurch gekennzeichnet, daß die Niederhalterkraft durch eine Druckfeder (30, 40, 57) unterstützt wird.
